# EUROPEAN PATENT SPECIFICATION

(11) **EP 2 272 700 B1**
(45) Date of publication and mention of the grant of the patent: **01.02.2012**
(21) Application number: 09380128.0
(22) Date of filing: 06.07.2009
(51) Int. Cl.: B60J 7/06

(54) **Collapsible roof device for a long vehicle such a touristic bus**
Ablegbare Dachanordnung für ein langes Fahrzeug wie z. B. einen Reisebus
Dispositif de toit décapotable pour un véhicule long, p.ex. un bus

(43) Date of publication of application: 12.01.2011
(73) Proprietor: Carrocerías Ayats, S.A., 17401 Arbúcies Gerona (ES)
(72) Inventor: Vila Pascual, Rita, 17401 Arbúcies Girona (ES)
(74) Representative: Isern-Jara, Nuria

(56) References cited:
- CH-A- 124 896
- GB-A- 276 839
- GB-A- 301 603

## Description

### Field of the Art

The present invention relates to a sliding roof device for a long vehicle, applicable for example to sightseeing buses or coaches, and to other long vehicles such as railway wagons, ships, etc. in which it is of interest to clear the roof surface to facilitate a better view of surroundings which are being visited.

### Background of the Invention

Patent EP-A-0827856 discloses a bus for sightseeing tours provided with a sliding roof formed by a flexible canopy fixed on bars arranged to move along guide rails to cover or uncover an opening in the roof of the vehicle.

Patent EP-A-1332904 describes a telescopic cover for covering relatively large areas. The cover comprises a plurality of cover elements movable between an extracted position, in which they cover the area, and a retracted position, in which they occupy a reduced collecting area. The cover elements comprise a cover panel and at least one front sliding foot and one rear sliding foot on each side, said sliding feet being arranged to run along lateral guide elements. The cover elements are identical to one another and, in the extended position, at least one cover element rests on the guide element with rear sliding feet and is supported with a front edge on a rear edge of an adjacent cover element. A drawback of this telescopic cover is that it does not allow substantially uncovering the entire area that it is capable of covering due to the fact that when the plurality of cover elements are superimposed in the retracted position, they always occupy a significant portion of the area.

Patent FR-A-2913373 discloses a sliding roof for a utility automobile. The sliding roof comprises several cover panels movable between an extended position, in which they cover an opening in the roof of the passenger compartment, and a retracted position on a support structure, which is associated with means for supporting and guiding the support structure together with the cover panels between the retracted position, an intermediate position located above a trunk compartment, and a considerably horizontal folded position at the upper part of said trunk compartment. Driving means are arranged to move the support structure together with the cover panels between the different positions. The supporting and guiding means comprise, on each side of the vehicle, a follower connected to the support structure cooperating with a longitudinal rail to guide the support structure together with the cover panels between the retracted and intermediate positions, a pivoting telescopic arm having a first end connected in an articulated manner to the rear part of the support structure and another end connected in an articulated manner to the structure of the vehicle, a follower connected to said pivoting telescopic arm cooperating with a rail with a shape adapted to continuously guide the support structure together with the cover panels between the retracted, intermediate and folded positions, and means for reducing the trajectory of said driving means.

The sliding roof described in the mentioned patent FR-A-2913373 has several drawbacks. Firstly, the supporting, guiding and driving means for moving the support structure together with the cover panels between the different positions form an extremely complex assembly which can be expensive to manufacture and maintain. Furthermore, the support structure together with the cover panels are supported in cantilever by the pivoting telescopic arm during its movements between the intermediate and folded positions, and this forces oversizing the supporting, guiding and driving means to withstand the forces to which they are subjected. In addition, the considerably horizontal position at a lower level than the roof of the vehicle reached by the support structure together with the cover panels in the folded position has little application in the field of long vehicles, such as sightseeing buses or coaches, since it imposes assembly storing conditions with a reduction of the useful space.

### Disclosure of the Invention

The present invention contributes to mitigating the previous and other drawbacks by providing a sliding roof device for a long vehicle, applicable to a sightseeing coach or bus, of the type comprising a plurality of sliding cover elements arranged to move between an extended position, in which said cover elements are arranged one after another covering an opening in the roof of the long vehicle, and a retracted position which leaves a large part of said opening in the roof of the long vehicle uncovered, and in which the cover elements are mutually superimposed or fitted in a compact arrangement supported by a pivoting structure, which is installed at an end of the long vehicle such that it can pivot between an unfolded position, in which said pivoting structure together with the cover elements cover a portion of the opening in the roof of the long vehicle, and a folded position, in which the pivoting structure together with the cover elements are in a withdrawn position at said end of the long vehicle. The sliding roof device is characterized in that the pivoting structure has, close to a front end, followers arranged to run along substantially horizontal longitudinal folding guides and, close to a rear end, one or more articulations connected to respective driving arms installed such that it can pivot about a transverse horizontal shaft located at a lower level than said folding guides under the drive of an actuator.

With this construction, the pivoting structure has at all times, including the stage of its movements between the unfolded and folded positions, its front end supported on the folding guides and its rear end supported by the driving arms. This allows the mechanisms for supporting, guiding and driving the movements of the pivoting structure together with the cover elements between the unfolded and folded positions to be extremely simple and lightweight, and therefore have a low cost, the maintenance likewise being minimized. These mechanisms further allow the pivoting structure together with the cover elements to reach a substantially vertical position at a rear end of the long vehicle when they are in said folded position, which is very advantageous in the case of a sightseeing bus or coach since they leave substantially the entire opening in the roof thereof uncovered.

### Brief Description of the Drawings

The previous and other features and advantages will be more fully understood from the following detailed description of an embodiment with reference to the attached drawings, in which:
Figure 1 is a schematic and partial perspective view of a long vehicle, such as a sightseeing bus, showing a sliding roof, according to the invention;
Figure 2 is a perspective view of a pivoting structure, comprising side flanges in which there are defined guide elements for receiving the cover elements, in an inserted arrangement and superimposed, according to a compact formation;
Figure 3 is a perspective view of one of the cover elements forming the sliding roof;
Figure 4 is an elevational view of the vehicle with an enlarged detail of the means for moving the pivoting structure between its projecting extended position forming the rear part of the roof of the vehicle, and a substantially vertical retracted position, placed against the rear wall of said vehicle;

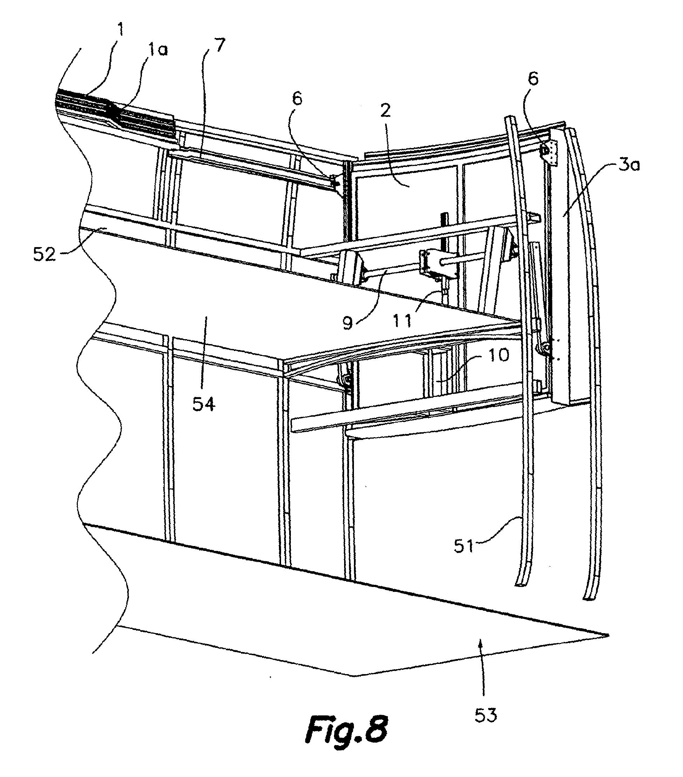

Figures 5 to 8 are respective perspective views showing, step by step, the movements of the pivoting structure between the two mentioned limit positions, still operating as a cover on the rear part of the vehicle, and retracted, completely clearing the rear part of the roof of the vehicle, and integrating therein the series of mentioned sliding cover elements, acting as a bearing module.

### Detailed Description of an Exemplary Embodiment

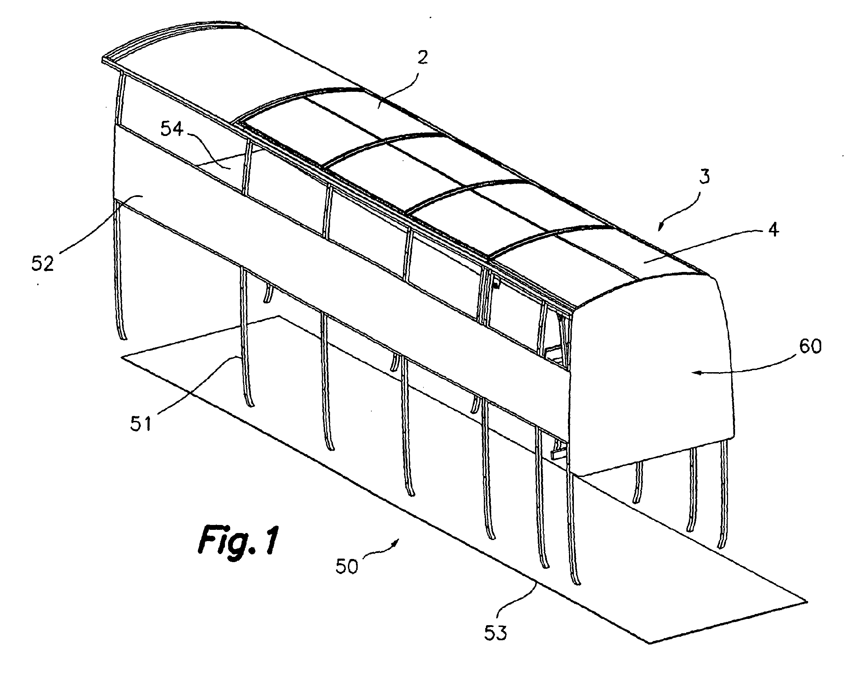

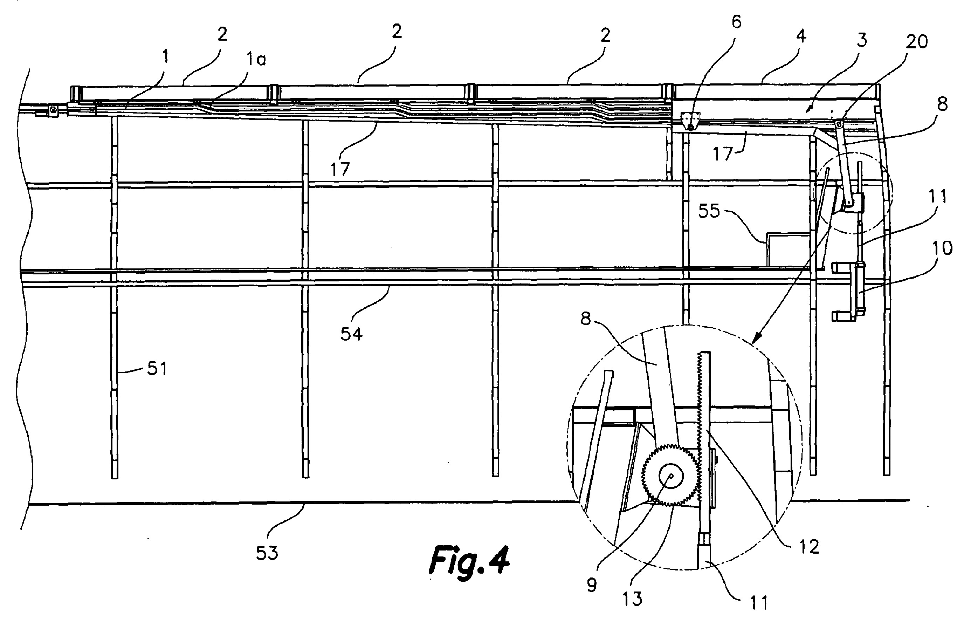

The sliding roof device for a long vehicle of this invention is of the type described in patent FR-A-2913373 (although this document describes a utility vehicle) and thus comprises a plurality of sliding cover elements 2 (see Figures 1 and 4) arranged to move between an extended position, in which said cover elements 2 are arranged one after another covering an opening in the roof of the vehicle, and a retracted position which leaves a large part or all of said opening in the roof of the vehicle uncovered, the cover elements 2 then being mutually superimposed or fitted in a compact arrangement supported by a pivoting structure 3. This pivoting structure, according to the mentioned state of the art, is usually installed at a rear end of the vehicle such that it can pivot between an unfolded position, in which said pivoting structure 3 together with the cover elements 2 cover a portion of the opening in the roof of the vehicle, and a folded position, in which the pivoting structure 3 together with the cover elements 2 are in a withdrawn position at said rear end of the vehicle, having to provide a storage area for that purpose.

The device of the invention has been designed for its application to a long vehicle 50, such as a sightseeing bus which has been schematically shown in Figure 1, comprising structural struts 51, a lower floor 53, an upper floor 54 delimited by side walls 52, which can be occupied by the users in order to considerably improve the conditions for viewing the surroundings from said raised position, it being important in said case to maximally clear any obstacle, such as a roof of the vehicle if the weather conditions allow it.

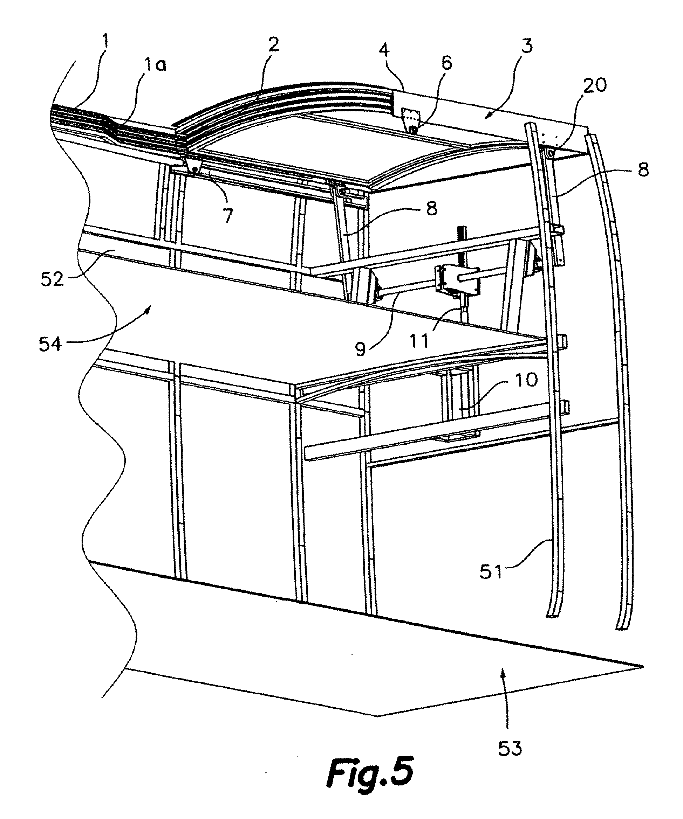

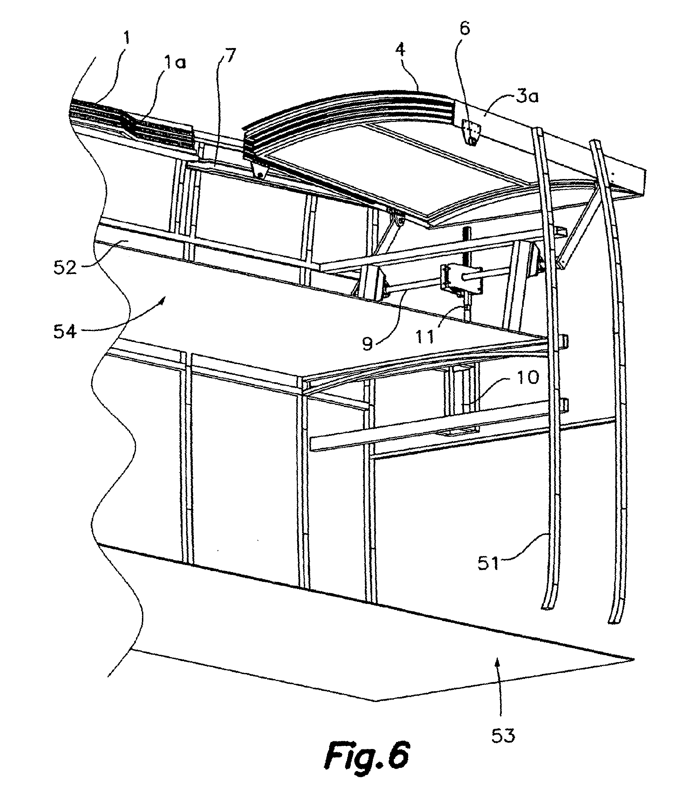

According to the invention, a pivoting structure 3 is provided, located at the rear part of the vehicle and provided close to a front end with followers 6 (for example, wheels) arranged to run along substantially horizontal longitudinal folding guides 7 (see Figures 5 and 6) and close to a rear end with articulations 20 connected to respective driving arms 8 installed such that they can pivot about a transverse horizontal shaft 9 located at a lower level than said folding guides 7 under the drive of an actuator.

The actuator comprises a hydraulic cylinder 10 the rod 11 of which is connected to a rack 12 meshed with a gear wheel 13 fixed to said shaft 9 or to said driving arm 8 as can be seen in the enlarged detail of Figure 4.

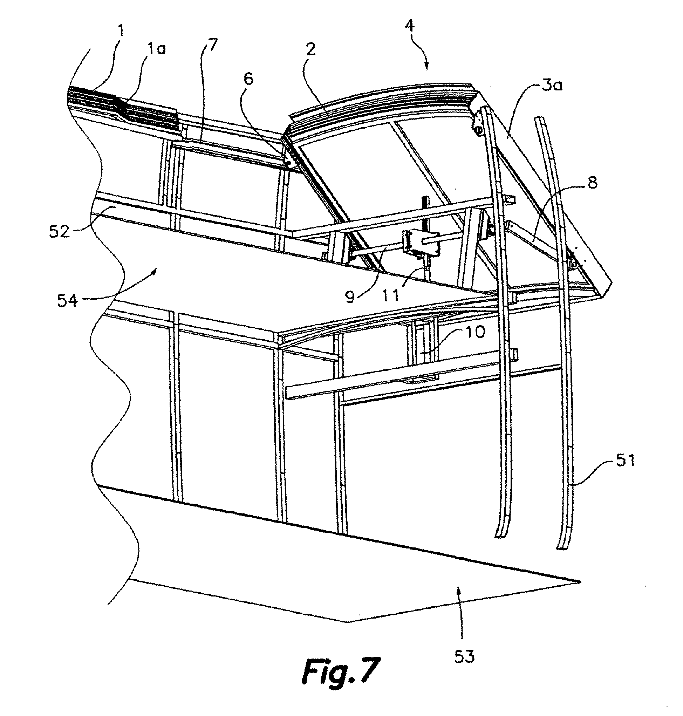

This special organization of the guide means and of the drive or thrust mechanism of the structure provides a safe and effective drive of the assembly, bearing in superposition the series of cover elements 2 (see Figures 5 to 7) duly supported at all times. Furthermore, the pivoting structure 3 together with the plurality of cover elements 2 supported by it adopt a substantially vertical position at a rear end of the long vehicle 50 when they are in said folded position, such that the vertical position next to the back 60 of the long vehicle 50 completely clears the roof of the vehicle and minimizes the useful space to be reserved for storing the pivoting structure 3, in its concealed state.

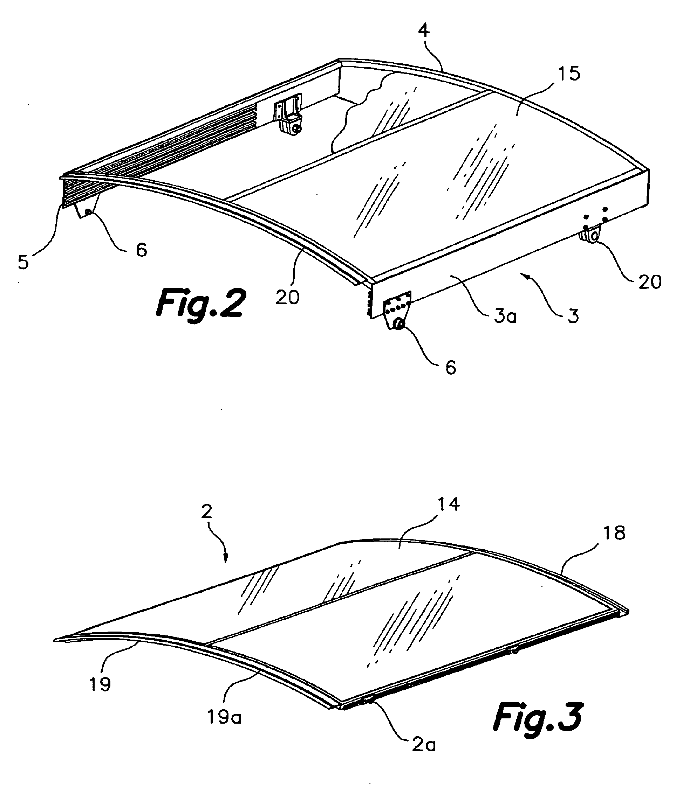

The cover elements 2 are arranged to move (for example, by traction means such as a chain or flexible element and a linear actuator, according to the state of the art) along a plurality of first guide elements 1 between said extended and retracted positions, and the pivoting structure 3 is provided with an upper cover element 4 and second guide elements 5 (see Figure 2) defined in the inner face of side flaps 3a, such that, when said pivoting structure 3 is in said unfolded position (Figure 5), said upper cover element 4 covers a portion of the opening in the roof of the long vehicle 50 and said second guide elements 5 are correspondingly aligned with said plurality of first guide elements 1 and arranged to receive the cover elements 2 under said upper cover element 4 of the pivoting structure 3.

As can be seen in Figure 4, the first guide elements 1 include sloping sections 1a to successively guide each of the cover elements 2 under the adjacent cover element 2 when the cover elements 2 are moved from the extended position to the retracted position, until the plurality of cover elements 2 are arranged one under another and under the upper cover element 4 in the pivoting structure 3 (Figure 5), forming a compact package.

Figure 3 shows one of the cover elements 2 (all of them are initially identical, although they could have a different length) which includes one or more curved cover panels 14, with a central part that is more raised than longitudinal side edges in which there are included small wheels 2a or a follower element to move over the mentioned guides 1, 1a in the sides.

The upper cover element 4 of the pivoting structure 3 in turn comprises, as shown in Figure 2, one or more curved cover panels 15, with a central part that is more raised than longitudinal side edges in which it is finished by the mentioned flaps 3a.

In a preferred embodiment, the first and second cover panels 14, 15 are transparent.

As can be seen in Figure 3, each of the first cover elements 2 has at one end a wide transverse channel 18 for collecting and draining water and at the other opposite end a small roof 19, with a narrow transverse channel 19a, for drainage (to facilitate the insertion in the mentioned guides 1, 1a without jams), arranged to cover a joint between the first cover element 2 and another adjacent first cover element 2.

Furthermore, under the first guide elements 1 and the folding guides 7 there are arranged water draining channels 17 to collect the water falling on the first and second cover elements 2, 4 when they are in the extended position and draining it out of the long vehicle 50 through a suitable conduit, not shown. Said water draining channels 17 form a base for supporting the assembly of mentioned guide elements 1,5.

The pivoting structure 3 comprises, under the upper cover element 4, side skirts or flaps 3a supporting the second guide elements 5 and between which (in the inner face thereof provided with a plurality of opposite grooves) there is housed the plurality of cover elements 2 one under another in the retracted position.

As shown in Figure 2, the pivoting structure 3 has at one end a small roof 20 arranged to cover a joint between the pivoting structure 3 and an adjacent first cover element 2.

## Claims

1. A sliding roof device for a long vehicle, applicable to a sightseeing bus, of the type comprising a plurality of sliding cover elements (2) arranged to move between an extended position, in which said cover elements (2) are arranged one after another for covering an opening in the roof of the vehicle, and a retracted position which leaves a large part of said opening in the roof of the vehicle uncovered, in which the cover elements (2) are mutually superimposed or fitted in a compact arrangement supported by a pivoting structure (3), which is to be installed at an end of the long vehicle (50) such that it can pivot between an unfolded position, in which said pivoting structure (3) together with the cover elements (2) cover a portion of the opening in the roof of the vehicle, and a folded position, in which the pivoting structure (3) together with the cover elements (2) are in a withdrawn position at said end of the vehicle, **characterized in that** the pivoting structure (3) has, close to its front end, followers (6) arranged to run along substantially horizontal longitudinal folding guides (7) and, close to its rear end, at least one articulation (20) connected to a driving arm (8) installed such that it can pivot about a transverse horizontal shaft (9) located at a lower level than said folding guides (7) under the drive of an actuator.

2. The device according to claim 1, **characterized in that** the pivoting structure (3) together with the plurality of cover elements (2) supported by it adopt a substantially vertical position at a rear end of the long vehicle (50) when they are in said folded position.

3. The device according to claim 2, **characterized in that** the cover elements (2) are arranged to move along a plurality of first guide elements (1) between said extended and retracted positions, and the pivoting structure (3) is provided with an upper cover element (4) and second guide elements (5), such that, when said pivoting structure (3) is in said unfolded position, said upper cover element (4) covers a portion of the opening in the roof of the long vehicle (50) and said second guide elements (5) are correspondingly aligned with said plurality of first guide elements (1) and arranged to receive the cover elements (2) under said upper cover element (4) of the pivoting structure (3).

4. The device according to claim 3, **characterized in that** said first guide elements (1) include sloping sections (1a) to successively guide each of the cover elements (2) under the adjacent cover element (2) when the cover elements (2) are moved from the extended position to the retracted position, until the plurality of cover elements (2) are arranged one under another and under the upper cover element (4) in the pivoting structure (3).

5. The device according to claim 3, **characterized in that** each of the cover elements (2) has at least one curved cover panel (14), with a central part that is more raised than longitudinal side edges, and the upper cover element (4) of the pivoting structure (3) comprises at least one curved second cover panel (15), with a central part that is more raised than longitudinal side edges.

6. The device according to claim 5, **characterized in that** the pivoting structure (3) comprises, under the upper cover element (4), side skirts (16) supporting the second guide elements (5) and between which there is housed the plurality of cover elements (2) one under another in the retracted position.

7. The device according to claim 6, **characterized in that** the first and second cover panels (14, 15) are transparent.

8. The device according to claim 1, **characterized in that** said actuator comprises a hydraulic cylinder (10) the rod (11) of which is connected to a rack (12) meshed with a gear wheel (13) fixed to said shaft (9) or to said driving arm (8).

9. The device according to claim 3, **characterized in that** each of the first cover elements (2) has at a first end a transverse channel (18) for collecting and draining water and at the other opposite end a small roof (19) arranged to cover a joint between the first cover element (2) and another adjacent first cover element (2).

10. The device according to claim 9, **characterized in that** a groove for collecting and draining water has been provided in said small roof (19).

11. The device according to claim 9 or 10, **characterized in that** under the first guide elements (1) and the folding guides (7) there are arranged water draining channels (17) to collect the water falling on the first and second cover elements (2, 4) when they are in the extended position and draining it out of the long vehicle (50).

12. The device according to claim 3, **characterized in that** the pivoting structure (3) has at one end a small roof (20) arranged to cover a joint between the pivoting structure (3) and an adjacent first cover element (2).

## Patentansprüche

1. Schiebedacheinrichtung für ein langes Fahrzeug, anwendbar auf einen Städtebesichtigungsbus, von der Art, die eine Mehrzahl von Deckelementen (2) aufweist, welche derart angeordnet sind, dass sie zwischen einer ausgefalteten Lage, in der die besagten Schiebedachelemente (2) nacheinander angeordnet sind, um eine Öffnung im Dach des Fahrzeuges zu bedecken, und einer zusammengefalteten Lage, die einen grossen Teil besagter Öffnung im Dach des Fahrzeugs unbedeckt lässt, wobei die Deckelemente (2) gegenseitig überlagert sind oder eingepasst sind in eine kompakte, von einer schwenkbaren Struktur (3) getragenen Einrichtung, die an einem Ende des langen Fahrzeugs (50) derart zu installieren ist, dass sie schwenkbar ist zwischen einer auseinandergefalteten Lage, in der die schwenkbare Struktur (3) zusammen mit den Deckelementen (2) einen Teil der Öffnung im Dach des Fahrzeugs abdeckt, und einer zusammengefalteten Lage, in der sich die schwenkbare Struktur (3) zusammen mit den Deckelementen (2) am besagten Ende des Fahrzeugs befindet, **dadurch gekennzeichnet, dass** die schwenkbare Struktur (3) in der Nähe ihres vorderen Endes Kurvenrollen (6) aufweist, die derart ausgestaltet sind, dass sie entlang von im wesentlichen horizontalen Längsführungen (7) verlaufen, und dass sie in der Nähe ihres hinteren Endes zumindest ein Gelenk (20) aufweist, das mit einem Antriebsarm (8) verbunden ist, der derart ausgestaltet ist, dass er um einen horizontalen Querschaft (9) schwenkbar ist, der sich auf einem niedrigeren Niveau befindet als die genannten Faltführungen (7) unter dem Antrieb eines Reglers.

2. Einrichtung gemäss Anspruch 1, **dadurch gekennzeichnet, dass** die schwenkbare Struktur (3), zusammen mit der Mehrzahl der von ihr getragenen Deckelemente (2), wenn sie sich in der besagten zusammengefalteten Lage befinden, an einem hinteren Ende des langen Fahrzeugs (50) eine wesentlich vertikale Stellung einnehmen.

3. Einrichtung gemäss Anspruch 2, **dadurch gekennzeichnet, dass** die Deckelemente (2) derart ausgestaltet sind, dass sich sie entlang einer Mehrzahl erster Führungselemente (1) zwischen der genannten ausgefahrenen und der zusammengefalteten Lage bewegen, und dass die schwenkbare Struktur (3) mit einem oberen Deckelement (4) und mit zweiten Führungselementen (5) ausgestattet ist, so dass dieses obere Deckelement (4), wenn sich die schwenkbare Struktur (3) in der genannten ausgefalteten Lage befindet, einen Teil der Öffnung im Dach des langen Fahrzeuges (50) abdeckt, und dass die genannten zweiten Führungselemente (5) entsprechend mit der Mehrzahl der ersten Führungselemente (1) fluchten, und so ausgestaltet sind, dass sie die Deckelemente (2) unter dem genannten oberen Deckelement (4) der schwenkbaren Struktur (3) aufnehmen.

4. Einrichtung gemäss Anspruch 3, **dadurch gekennzeichnet, dass** die genannten ersten Führungselemente (1) Schrägabschnitte (1a) aufweisen, um nacheinander jedes der Deckelemente (2) unter dem benachbarten Deckelement (2) zu führen, wenn die Deckelemente (2) von der ausgefahrenen Lage zur zusammengezogenen Lage gebracht werden, bis die Mehrzahl der Deckelemente (2) jeweils untereinander, und unter dem oberen Deckelement (4) der schwenkbaren Struktur (3) angeordnet sind.

5. Einrichtung gemäss Anspruch 3, **dadurch gekennzeichnet, dass** jedes der Deckelemente (2) zumindest eine gekrümmte Deckplatte (14) mit einem zentralen Abschnitt aufweist, der stärker angehoben ist als die länglichen Seitenkanten, und dass das obere Deckelement (4) der schwenkbaren Struktur (3) zumindest eine zweite gekrümmte Deckplatte (15) mit einem zentralen Abschnitt aufweist, der stärker angehoben ist als die länglichen Seitenkanten.

6. Einrichtung gemäss Anspruch 5, **dadurch gekennzeichnet, dass** die schwenkbare Struktur (3) unter dem oberen Deckelement (4), Seitenleisten (16) aufweist, die die zweiten Führungselemente (5) tragen, und zwischen welchen in der zusammengezogenen Lage die Mehrzahl der Deckelemente (2) untereinander angebracht ist.

7. Einrichtung gemäss Anspruch 6, **dadurch gekennzeichnet, dass** die ersten und zweiten Deckplatten (14, 15) transparent sind.

8. Einrichtung gemäss Anspruch 1, **dadurch gekennzeichnet, dass** der genannte Regler einen hydraulischen Zylinder (10) aufweist, dessen Stange (11) mit einem Gestell (12) verbunden ist, das in Eingriff steht mit einem Getrieberad (13), das an genanntem Schaft (9) oder genanntem Antriebsarm (8) befestigt ist.

9. Einrichtung gemäss Anspruch 3, **dadurch gekennzeichnet, dass** jedes der ersten Deckelemente (2) an einem ersten Ende einen Querkanal (18) zum Aufnehmen und Ableiten von Wasser aufweist, und am gegenüberliegenden Ende ein kleines Dach (19) zur Überdeckung eines Spaltes zwischen dem ersten Deckelement (2) und einem anderen benachbarten ersten Deckelement (2) aufweist.

10. Einrichtung gemäss Anspruch 9, **dadurch gekennzeichnet, dass** in dem genannten kleinen Dach (19) eine Nute zum Aufsammeln und Abführen von Wasser vorgesehen ist.

11. Einrichtung gemäss Anspruch 9 oder 10, **dadurch gekennzeichnet, dass** unter den ersten Führungselementen (1) und den Faltführungen (7) wasserableitende Kanale (17) vorgesehen sind, um das Wasser aufzunehmen, das auf die ersten und zweiten Deckelemente (2, 4) fällt, wenn sie sich in der ausgezogenen Position befinden, und es aus dem langen Fahrzeug (50) abzuleiten.

12. Einrichtung gemäss Anspruch 3, **dadurch gekennzeichnet, dass** die schwenkbare Struktur (3) an einem Ende ein kleines Dach (20) zur Überdeckung eines Spaltes zwischen der schwenkbaren Struktur (3) und einem benachbarten ersten Deckelement (2) aufweist.

## Revendications

1. Dispositif de toit ouvrant pour un véhicule long, applicable à un bus de tourisme, du type qui comprend une pluralité d'éléments de couverture coulissants (2) disposés pour se déplacer entre une position étendue, dans laquelle lesdits éléments de couverture (2) sont arrangés les uns après les autres, en couvrant une ouverture dans le toit du véhicule, et une position contractée qui laisse une grande partie de cette ouverture dans le toit du véhicule découverte, dans laquelle les éléments de couverture (2) sont mutuellement superimposés ou adaptés dans un arrangement compact supporté par une structure pivotante (3), qui doit être installée à une extrémité du véhicule long (50) de manière qu'elle puisse pivoter entre une position dépliée, dans laquelle cette structure pivotante (3) ensemble avec les éléments de couverture (2) couvre une portion de l'ouverture dans le toit du véhicule, et une position pliée, dans laquelles la structure pivotante (3) ensemble avec les éléments de couverture (2) se trouve dans une position contractée à cette extrémité du véhicule, **caractérisé en ce que** la structure pivotante (3), à proximité de l'extrémité antérieure, comprend des galets (6) arrangés pour glisser le long de guides de pliage longitudinaux (7) substantiellement horizontaux, et, près de son extrémité postérieure, au moins une articulation (20) connectée à un bras propulseur (8) installé de manière qu'il puisse pivoter autour d'une tige transversale horizontale (9) située à un niveau inférieur que lesdits guides de pliage (7) sous l'actionnement d'un régulateur.

2. Dispositif suivant la revendication 1, **caractérisé en ce que** la structure pivotante (3), ensemble avec la pluralité d' éléments de couverture (2) supportés par celle-ci adopte une position substantiellement verticale à l'extrémité postérieure du véhicule long (50) quand ils se trouvent dans cette position pliée.

3. Dispositif suivant la revendication 2, **caractérisé en ce que** les éléments de couverture (2) sont arrangés afin de se déplacer le long d'une pluralité de premiers éléments de guide (1) entre ces positions étendues et contractées, et la structure pivotante (3) est pourvue d'un élément supérieur de couverture (4) et de seconds éléments de guide (5) de manière que, quand cette structure pivotante (3) se trouve dans ladite position dépliée, cet élément supérieur de couverture (4) couvre une portion de l'ouverture dans le toit du véhicule long (50) et lesdits seconds éléments de guide (5) sont alignés de manière correspondante avec cette pluralité de premiers éléments de guide (1) et arrangés afin de recevoir les éléments de couverture (2) sous ledit élément supérieur de couverture (4) de la structure pivotante (3).

4. Dispositif suivant la revendication 3, **caractérisé en ce que** lesdits premiers éléments de guide (1) incluent des sections en biais (1a) pour guider successivement chacun des éléments de couverture (2) sous l'élément de couverture adjacent (2) quand les éléments de couverture (2) sont déplacés de la position dépliée à la position contractée, jusqu'à ce que la pluralité d' éléments de couverture (2) sont arrangés les uns sous les autres et en dessous de l'élément supérieur de couverture (4) dans la structure pivotante (3).

5. Dispositif suivant la revendication 3, **caractérisé en ce que** chacun des éléments de couverture (2) présente au moins un panneau courbé de couverture (14), avec une partie centrale qui est plus élevée que les bords latéraux longitudinaux, et l'élément supérieur de couverture (4) de la structure pivotante (3) comprend au moins un panneau courbé de couverture (15), avec une partie centrale qui est plus élevée que les bords latéraux longitudinaux.

6. Dispositif suivant la revendication 5, **caractérisé en ce que** la structure pivotante (3) comprend, sous l'élément supérieur de couverture (4), des listons latéraux (16) qui supportent les seconds éléments de guide (5) et entre lesquels est logée la pluralité d'éléments de couverture (2), les uns sous les autres, dans la position contractée.

7. Dispositif suivant la revendication 6, **caractérisé en ce que** les premiers et seconds panneaux de couverture (14, 15) sont transparents.

8. Dispositif suivant la revendication 1, **caractérisé en ce que** ledit régulateur comprend un cylindre hydraulique (10) dont la tige (11) est connectée à un rack (12) engagé avec une roue d'engrenage (13) fixée à cette tige (9) ou a ce bras propulseur (8).

9. Dispositif suivant la revendication 3, **caractérisé en ce que** chacun des premiers éléments de couverture (2) présente à une première extrémité un canal transversal (18) pour recueillir et évacuer de l'eau, et à l'autre bout opposé un petit toit (19) arrangé pour couvrir une fente entre le premier élément de couverture (2) et un un autre premier élément de couverture adjacent (2).

10. Dispositif suivant la revendication 9, **caractérisé en ce que** une rainure pour recueillir et évacuer de l'eau a été arrangée dans ledit petit toit (19).

11. Dispositif suivant la revendication 9 ou 10, **caractérisé en ce que**, sous les premiers éléments de guide (1) et les guides de pliage (7) sont arrangés des canaux d'évacuation d'eau (17) pour recueillir l'eau qui tombe sur les premiers et seconds éléments de couverture (2, 4) quand ils se trouvent dans la position étendue, et l'évacuer hors du véhicule long (50).

12. Dispositif suivant la revendication 3, **caractérisé en ce que** la structure pivotante (3) présente à une de ses extrémités un petit toit (20) adapté pour couvrir une fente entre la structure pivotante (3) et un premier élément de couverture adjacent(2).
